(19) Europäisches Patentamt / European Patent Office / Office européen des brevets

(11) EP 4 307 792 A1

# (12) EUROPEAN PATENT APPLICATION

published in accordance with Art. 153(4) EPC

(43) Date of publication:
**17.01.2024 Bulletin 2024/03**

(21) Application number: **22767472.8**

(22) Date of filing: **08.03.2022**

(51) International Patent Classification (IPC):
***H04W 72/02*** *(2009.01)* ***H04W 72/04*** *(2023.01)*
***H04W 72/12*** *(2023.01)* ***H04W 28/26*** *(2009.01)*
***H04W 76/28*** *(2018.01)* ***H04W 4/40*** *(2018.01)*

(52) Cooperative Patent Classification (CPC):
**H04W 4/40; H04W 28/26; H04W 72/02; H04W 72/04; H04W 72/12; H04W 76/28**

(86) International application number:
**PCT/KR2022/003261**

(87) International publication number:
**WO 2022/191576 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.03.2021 KR 20210030199**
**04.01.2022 KR 20220000707**

(71) Applicant: **LG Electronics Inc.**
**Yeongdeungpo-gu**
**Seoul 07336 (KR)**

(72) Inventors:
- **PARK, Giwon**
  **Seoul 06772 (KR)**
- **LEE, Seungmin**
  **Seoul 06772 (KR)**
- **BACK, Seoyoung**
  **Seoul 06772 (KR)**
- **HONG, Jongwoo**
  **Seoul 06772 (KR)**

(74) Representative: **Plasseraud IP**
**66, rue de la Chaussée d'Antin**
**75440 Paris Cedex 09 (FR)**

## (54) METHOD AND APPARATUS FOR RESELECTING RESOURCE IN NR V2X

(57) Provided are a method for performing wireless communication by a first device and an apparatus supporting same. The method may comprise the steps of: obtaining a sidelink (SL) discontinuous reception (DRX) configuration including information related to a timer for an active time; selecting a first SL resource within a selection window on the basis of sensing; triggering a re-evaluation procedure or a pre-emption procedure for the first SL resource; selecting a second SL resource in place of the first SL resource in the re-evaluation procedure or the pre-emption procedure; determining that the second SL resource is out of the active time of a second device; and triggering a resource reselection procedure for the second SL resource.

FIG. 14

obtain SL DRX configuration including information related to timer for active time
S1410
select, based on sensing, first SL resource within selection window
S1420
trigger re-evaluation procedure or pre-emption procedure for first SL resource
S1430
reselect first SL resource as second SL resource in re-evaluation procedure or pre-emption procedure
S1440
determine that second SL resource is outside active time of second device
S1450
trigger resource reselection procedure for second SL resource
S1460



Processed by Luminess, 75001 PARIS (FR)

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

### DISCLOSURE

### TECHNICAL PROBLEM

Meanwhile, if the reselected resource of the TX UE due to re-evaluation and/or pre-emption is included in the SL DRX inactive time of the RX UE, the reliability of SL communication may not be guaranteed due to SL communication based on the reselected resource.

### TECHNICAL SOLUTION

In an embodiment, provided is a method for performing wireless communication by a first device. The method may comprise: obtaining a sidelink (SL) discontinuous reception (DRX) configuration including information related to a timer for an active time; selecting, based on sensing, a first SL resource within a selection window; triggering a re-evaluation procedure or a pre-emption procedure for the first SL resource; reselecting the first SL resource as a second SL resource in the re-evaluation procedure or the pre-emption procedure; determining that the second SL resource is outside the active time of a second device; and triggering a resource reselection procedure for the second SL resource.

In an embodiment, provided is a first device adapted to perform wireless communication. The first device may comprise: one or more memories storing instructions; one or more transceivers; and one or more processors connected to the one or more memories and the one or more transceivers. For example, the one or more processors may execute the instructions to: obtain a sidelink (SL) discontinuous reception (DRX) configuration including information related to a timer for an active time; select, based on sensing, a first SL resource within a selection window; trigger a re-evaluation procedure or a pre-emption procedure for the first SL resource; reselect the first SL resource as a second SL resource in the re-evaluation procedure or the pre-emption procedure; determine that the second SL resource is outside the active time of a second device; and trigger a resource reselection procedure for the second SL resource.

### ADVANTAGEOUS EFFECTS

The power saving gain of the UE can be maximized and the reliability of SL communication can be secured.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.

FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 is a diagram to show a problem that may occur in resource reselection based on pre-emption.
FIG. 9 shows resource (re)selection, resource reservation through SCI, and SCI transmission including reserved resources of a TX UE, based on an embodiment of the present disclosure.
FIG. 10 shows a method for a TX UE to perform resource reselection based on pre-emption, based on an embodiment of the present disclosure.
FIG. 11 shows a SL DRX operation of an RX UE according to a resource reselection procedure due to re-evaluation and/or pre-emption operations of a TX UE, based on an embodiment of the present disclosure.
FIG. 12 shows a SL DRX operation of an RX UE according to a resource reselection procedure due to re-evaluation and/or pre-emption operations of a TX UE, based on an embodiment of the present disclosure.
FIG. 13 shows a SL DRX operation of an RX UE according to a resource reselection procedure due to re-evaluation and/or pre-emption operations of a TX UE, based on an embodiment of the present disclosure.
FIG. 14 shows a method for a first device to perform wireless communication, based on an embodiment of the present disclosure.
FIG. 15 shows a method for a second device to perform wireless communication, based on an embodiment of the present disclosure.
FIG. 16 shows a communication system 1, based on an embodiment of the present disclosure.
FIG. 17 shows wireless devices, based on an embodiment of the present disclosure.
FIG. 18 shows a signal process circuit for a transmission signal, based on an embodiment of the present disclosure.
FIG. 19 shows another example of a wireless device, based on an embodiment of the present disclosure.
FIG. 20 shows a hand-held device, based on an embodiment of the present disclosure.
FIG. 21 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5GNR. However, technical features according to an embodiment of the present disclosure will not be limited only to this.

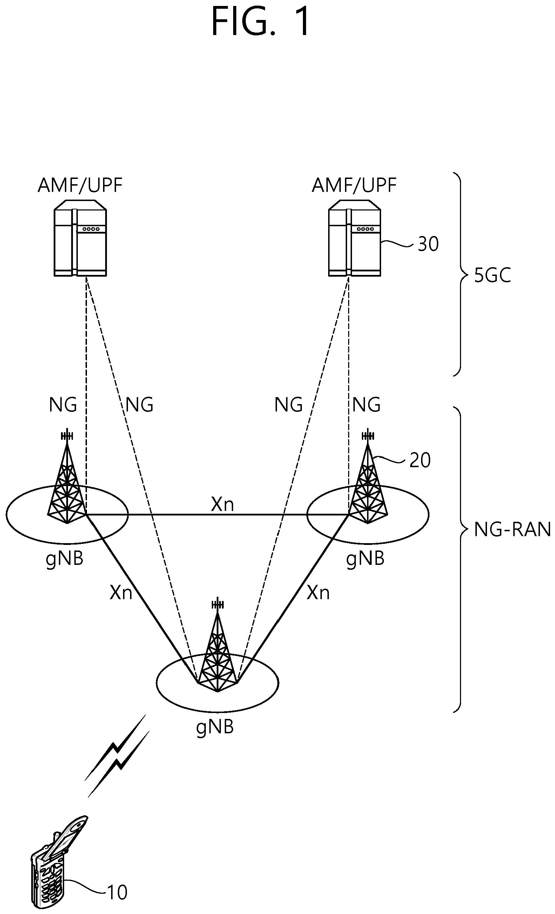

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

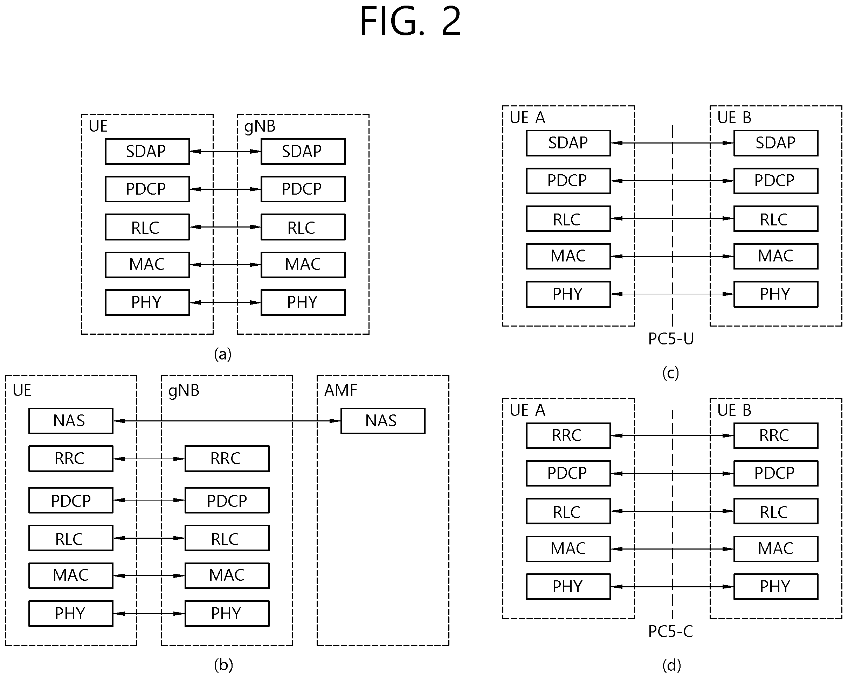

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

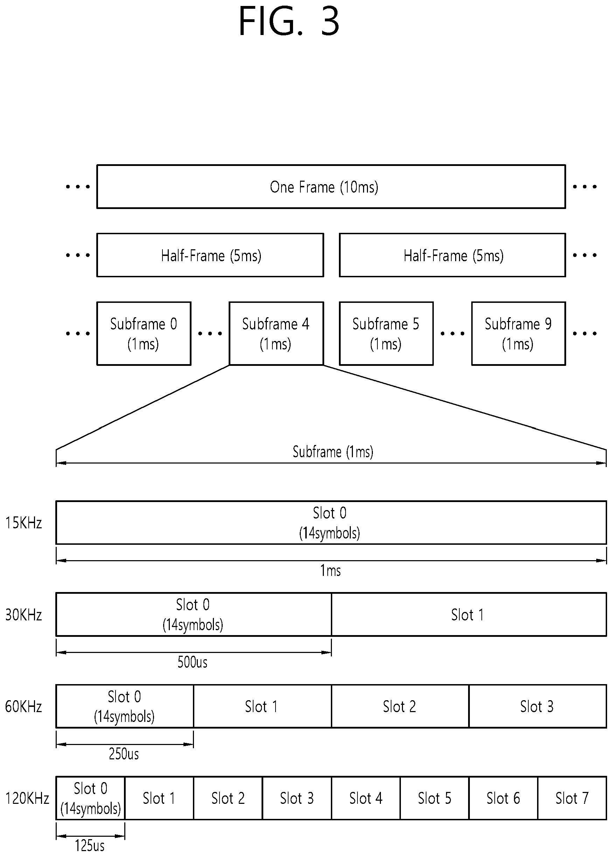

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). Ahalf-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

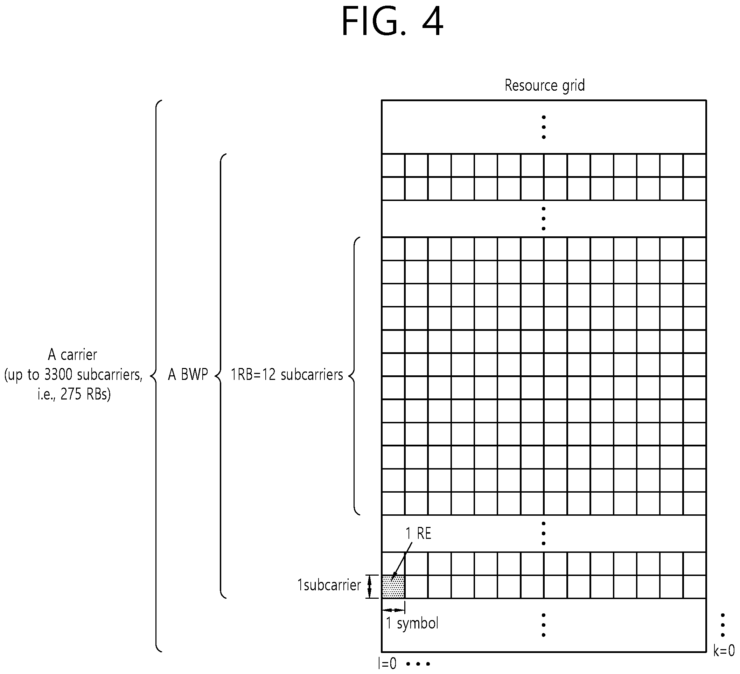

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

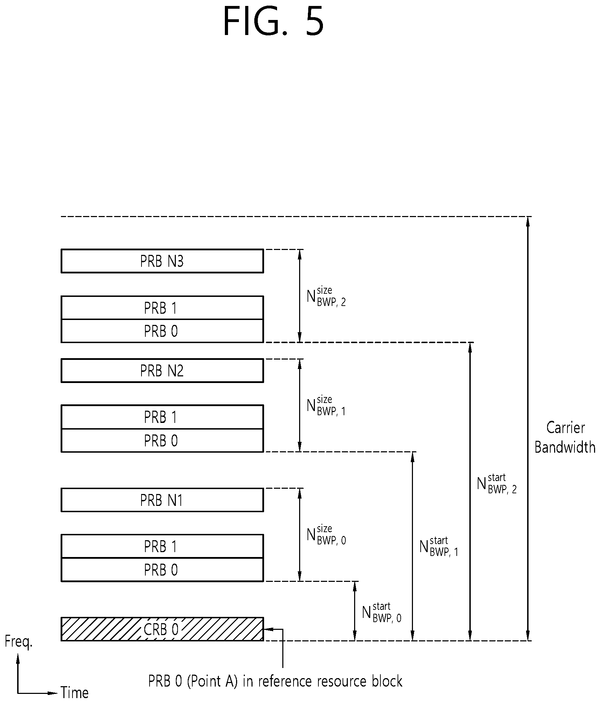

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

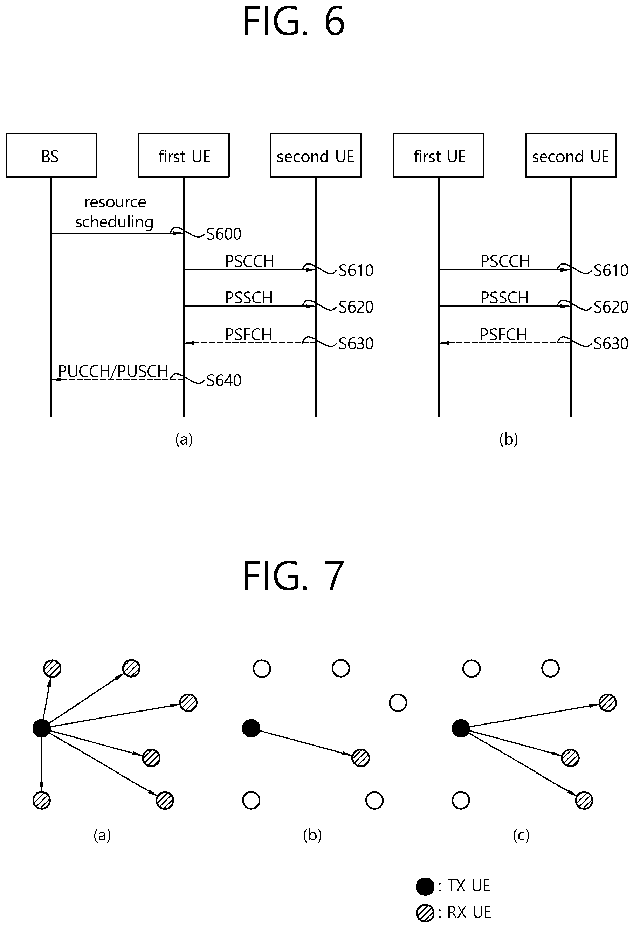

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:

- Resource pool index - ceiling ($\log_2 I$) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling ($\log_2(N^{SL}_{subChannel})$) bits
- SCI format 1-A fields: frequency resource assignment, time resource assignment
- PSFCH-to-HARQ feedback timing indicator - ceiling ($\log_2 Nf_{b_timing}$) bits, where $N_{fb_timing}$ is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling ($\log_2(N^{SL}_{subChannel}(N^{SL}_{subChannel}+1)/2)$) bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling ($\log_2 N_{rsv_period}$) bits, where $N_{rsv_period}$ is the number of entries in the higher layer parameter sl-ResourceReservePeriodList, if higher layer parameter sl-MultiReserveResource is configured; 0 bit otherwise
- DMRS pattern - ceiling ($\log_2 N_{pattern}$) bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits

- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.
SCI format 2-B is used for the decoding of PSSCH, with HARQ operation when HARQ-ACK information includes only NACK, or when there is no feedback of HARQ-ACK information.
The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.
Referring to (a) of FIG. 6, in step S640, the first UE may transmit SL HARQ feedback to the base station through the PUCCH and/or the PUSCH.
FIG. 7 shows three cast types, based on an embodiment of the present disclosure. The embodiment of FIG. 7 may be combined with various embodiments of the present disclosure. Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.
Hereinafter, a hybrid automatic repeat request (HARQ) procedure will be described.
For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.
For example, the SL HARQ feedback may be enabled for groupcast. For example, in the non-CBG operation, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.
(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Hereinafter, UE procedure for reporting HARQ-ACK on sidelink will be described.

A UE can be indicated by an SCI format scheduling a PSSCH reception, in one or more sub-channels from a number of $N^{PSSCH}_{subch}$ sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot $t'^{SL}_k$ ($0 \le k < T'_{max}$) has a PSFCH transmission occasion resource if k mod $N^{PSFCH}_{PSSCH}$= 0, where $t'^{SL}_k$ is a slot that belongs to the resource pool, $T'_{max}$ is a number of slots that belong to the resource pool within 10240 msec, and $N^{PSFCH}_{PSSCH}$ is provided by sl-PSFCH-Period-r16. A UE may be indicated by higher layers to not transmit a PSFCH in response to a PSSCH reception.If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of $M^{PSFCH}_{PRB,set}$ PRBs in a resource pool for PSFCH transmission in a PRB of the resource pool. For a number of $N_{subch}$ sub-channels for the resource pool, provided by sl-NumSubchannel, and a number of PSSCH slots associated with a PSFCH slot that is less than or equal to $N^{PSFCH}_{PSSCH}$, the UE allocates the $[(i+j \cdot N^{PSFCH}_{PSSCH}) \cdot M^{PSFCH}_{subch,slot},\ (i+1+j \cdot N^{PSFCH}_{PSSCH}) \cdot M^{PSFCH}_{subch,slot}-1]$ PRBs from the $M_{PRB,set}{}^{PSFCH}$ PRBs to slot i among the PSSCH slots associated with the PSFCH slot and sub-channel j, where $M^{PSFCH}_{subch,slot} = M^{PSFCH}_{PRB,set}/(N_{subch} \cdot N^{PSFCH}_{PSSCH})$, $0 \le i < N^{PSFCH}_{PSSCH}$, $0 \le j < N_{subch}$, and the allocation starts in an ascending order of i and continues in an ascending order of j. The UE expects that $M^{PSFCH}_{PRB,set}$ is a multiple of $N_{subch} \cdot N^{PSFCH}_{PSSCH}$.

A UE determines a number of PSFCH resources available for multiplexing HARQ-ACK information in a PSFCH transmission as $R^{PSFCH}_{PRB,CS} = N^{PSFCH}_{type} \cdot M^{PSFCH}_{subch,slot} \cdot N^{PSFCH}_{CS}$ where $N^{PSFCH}_{CS}$ is a number of cyclic shift pairs for the resource pool and, based on an indication by higher layers,

- $N^{PSFCH}_{type} = 1$ and the $M^{PSFCH}_{subch,slot}$ PRBs are associated with the starting sub-channel of the corresponding PSSCH
- $N^{PSFCH}_{type} = N^{PSSCH}_{subch}$ and the $N^{PSSCH}_{subch} \cdot M^{PSFCH}_{subch,slot}$ PRBs are associated with one or more sub-channels from the $N^{PSSCH}_{subch}$ sub-channels of the corresponding PSSCH

The PSFCH resources are first indexed according to an ascending order of the PRB index, from the $N^{PSFCH}_{type} \cdot M^{PSFCH}_{subch,slot}$ PRBs, and then according to an ascending order of the cyclic shift pair index from the $N^{PSFCH}_{CS}$ cyclic shift pairs.

A UE determines an index of a PSFCH resource for a PSFCH transmission in response to a PSSCH reception as $(P_{ID} + M_{ID})$ mod $R^{PSFCH}_{PRB,CS}$ where $P_{ID}$ is a physical layer source ID provided by SCI format 2-A or 2-B scheduling the PSSCH reception, and $M_{ID}$ is the identity of the UE receiving the PSSCH as indicated by higher layers if the UE detects a SCI format 2-A with Cast type indicator field value of "01"; otherwise, $M_{ID}$ is zero.

A UE determines a $m_0$ value, for computing a value of cyclic shift $\alpha$, from a cyclic shift pair index corresponding to a PSFCH resource index and from $N^{PSFCH}_{CS}$ using Table 8.

[Table 8]

| $N^{PSFCH}_{CS}$ | $m_0$ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a $m_{cs}$ value, for computing a value of cyclic shift $\alpha$, as in Table 9 if the UE detects a SCI format 2-A with Cast type indicator field value of "01" or " 10", or as in Table 10 if the UE detects a SCI format 2-B or a SCI format 2-A with Cast type indicator field value of "11". The UE applies one cyclic shift from a cyclic shift pair to a sequence used for the PSFCH transmission.

[Table 9]

| HARQ-ACK Value | 0 (NACK) | 1 (ACK) |
|---|---|---|
| Sequence cyclic shift | 0 | 6 |

[Table 10]

| HARQ-ACK Value | 0 (NACK) | 1 (ACK) |
|---|---|---|
| Sequence cyclic shift | 0 | N/A |

Hereinafter, UE procedure for determining the subset of resources to be reported to higher layers in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{sub}CH$;
- optionally, the resource reservation interval, $P_{rsvp_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources ($r_0$, $r_1$, $r_2$, ...) which may be subject to re-evaluation and a set of resources ($r'_0$, $r'_1$, $r'_2$, ...) which may be subject to pre-emption.
- it is up to UE implementation to determine the subset of resources as requested by higher layers before or after the slot $r_i'' - T_3$, where $r_i''$ is the slot with the smallest slot index among ($r_0$, $r_1$, $r_2$, ...) and ($r'_0$, $r'_1$, $r'_2$, ...), and $T_3$ is equal to $T^{SL}_{proc,1}$. Herein, $T^{SL}_{proc,1}$ is defined as the number of slots according to SCS, where $\mu_{SL}$ is the SCS configuration of the SL BWP.

The following higher layer parameters affect this procedure:

- sl-SelectionWindowList: internal parameter $T_{2min}$ is set to the corresponding value from higher layer parameter sl-SelectionWindowList for the given value of $prio_{TX}$.
- sl-Thres-RSRP-List: this higher layer parameter provides an RSRP threshold for each combination ($p_i$, $p_j$), where pi is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.

- sl-ResourceReservePeriodList
- sl-SensingWindow: internal parameter $T_0$ is defined as the number of slots corresponding to sl-SensingWindow msec.
- sl-TxPercentageList: internal parameter X for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp_TX}$, if provided, is converted from units of msec to units of logical slots, resulting in $P'_{rsvp_TX}$.

Notation:
($t'^{SL}_0$, $t'^{SL}_1$, $t'^{SL}_2$, ...) denotes the set of slots which belongs to the sidelink resource pool.

For example, the UE may select a set of candidate resources ($S_A$) based on Table 11. For example, if resource (re)selection is triggered, the UE may select a set of candidate resources ($S_A$) based on Table 11. For example, if re-evaluation or pre-emption is triggered, the UE may select a set of candidate resources ($S_A$) based on Table 11.

[Table 11]

| The following steps are used: |
|---|
| 1) A candidate single-slot resource for transmission $R_{x,y}$ is defined as a set of $L_{subCH}$ contiguous sub-channels with sub-channel $x+j$ in slot $t'^{SL}_y$ where $j$ = 0,..., $L_{subCH}$ - 1. The UE shall assume that any set of $L_{subCH}$ contiguous sub-channels included in the corresponding resource pool within the time interval [$n$ + $T_1$,$n$ + $T_2$] correspond to one candidate single-slot resource, where<br>- selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP;<br>- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).<br>The total number of candidate single-slot resources is denoted by $M_{total}$. |
| 2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots. |
| 3) The internal parameter $Th(p_i,p_j)$ is set to the corresponding value of RSRP threshold indicated by the $i$-th field in *sl-Thres-RSRP-List,* where $i = p_i + (p_j - 1) * 8$. |
| 4) The set $S_A$ is initialized to the set of all the candidate single-slot resources. |
| 5) The UE shall exclude any candidate single-slot resource $R_{x,y}$ from the set $S_A$ if it meets all the following conditions:<br>- the UE has not monitored slot $t'^{SL}_m$ in Step 2.<br>- for any periodicity value allowed by the higher layer parameter *sl-ResourceReservePeriodList* and a hypothetical SCI format 1-A received in slot $t'^{SL}_m$ with '*Resource reservation period*' field set to that periodicity value and indicating all subchannels of the resource pool in this slot, condition c in step 6 would be met. |
| 5a) If the number of candidate single-slot resources $R_{x,y}$ remaining in the set $S_A$ is smaller than $X \cdot M_{total}$, the set $S_A$ is initialized to the set of all the candidate single-slot resources as in step 4. |
| 6) The UE shall exclude any candidate single-slot resource $R_{x,y}$ from the set $S_A$ if it meets all the following conditions: |

(continued)

a) the UE receives an SCI format 1-A in slot $t'^{SL}_{m}$, and '*Resource reservation period*' field, if present, and '*Priority*' field in the received SCI format 1-A indicate the values $P_{\text{rsvp_RX}}$ and $prio_{RX}$, respectively;

b) the RSRP measurement performed, for the received SCI format 1-A, is higher than $Th(prio_{RX}, prio_{TX})$;

c) the SCI format received in slot $t'^{SL}_{m}$ or the same SCI format which, if and only if the '*Resource reservation period*' field is present in the received SCI format 1-A, is assumed to be received in slot(s) $t'^{SL}_{m+q\times P'_{rsvp_RX}}$ determines the set of resource blocks and slots which overlaps with $R_{x,y+j\times P'_{rsvp_TX}}$ for $q$=1, 2, ..., 2 and j=0, 1, ..., $C_{resel}$ - 1. Here, $P'_{rsvp_RX}$ is $P_{\text{rsvp_RX}}$ converted to units of logical slots, $Q = \left\lceil \frac{T_{scal}}{P_{rsvp_RX}} \right\rceil$ if $P_{rsvp_RX} < T_{scal}$ and $n' - m \le P'_{rsvp_RX}$, where $t'^{SL}_{n'} = n$ if slot $n$ belongs to the set $\left(t'^{SL}_{0}, t'^{SL}_{1}, \ldots, t'^{SL}_{T'_{max}-1}\right)$, otherwise slot $t'^{SL}_{n'}$ is the first slot after slot $n$ belonging to the set $\left(t'^{SL}_{0}, t'^{SL}_{1}, \ldots, t'^{SL}_{T'_{max}-1}\right)$; otherwise $Q$ = 1. $T_{scal}$ is set to selection window size $T_2$ converted to units of msec.

7) If the number of candidate single-slot resources remaining in the set $S_A$ is smaller than $X \cdot M_{\text{total}}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set ($r_0$, $r_1$, $r_2$, ... ) is not a member of $S_A$, then the UE shall report re-evaluation of the resource $r_i$ to higher layers.

If a resource $r'_i$ from the set $(r'_0, r'_1, r'_2, \ldots)$ meets the conditions below then the UE shall report pre-emption of the resource $r'_i$ to higher layers

- $r'_i$ is not a member of $S_A$, and
- $r'_i$ meets the conditions for exclusion in step 6, with $Th(prio_{RX}, prio_{TX})$ set to the final threshold after executing steps 1)-7), i.e. including all necessary increments for reaching $X \cdot M_{\text{total}}$, and
- the associated priority $prio_{RX}$, satisfies one of the following conditions:
  - *sl-PreemptionEnable* is provided and is equal to 'enabled' and $prio_{TX} > prio_{RX}$
  - *sl-PreemptionEnable* is provided and is not equal to 'enabled', and $prio_{RX} < prio_{pre}$ and $prio_{TX} > prio_{RX}$

Meanwhile, in NR V2X of release 16, a power saving operation of a UE was not supported. On the other hand, from NR V2X of release 17, the power saving operation of a UE (e.g., Power Saving UE) will be supported.

Meanwhile, for the power saving operation of the UE (e.g., SL DRX operation), a SL DRX configuration (e.g., SL DRX cycle, SL DRX on-duration, SL DRX off-duration, timers (e.g., SL DRX inactivity timer, SL DRX HARQ RTT timer, SL DRX retransmission timer) to support the SL DRX operation, etc.) to be used by a power saving UE (P-UE) should be defined. In addition, in on-duration (e.g., duration in which sidelink reception/transmission can be performed) and/or off-duration (e.g., duration operating in a sleep mode), the behavior of a transmitting (TX) UE and a receiving (RX) UE should be defined.

In addition, the SL DRX operation (e.g., SL DRX timer operation) of the RX UE may be applied differently depending on the resource selection/reservation operation of the TX UE.

Based on various embodiments of the present disclosure, the SL DRX operation method of the RX UE (or the TX UE) based on the resource (re)selection/reservation operation of the TX UE and an apparatus supporting the same are proposed.

The SL DRX configuration referred to in the present disclosure may include at least one or more of the following parameters/information.

(1) SL drx-onDurationTimer: the duration at the beginning of a DRX Cycle
(2) SL drx-SlotOffset: the delay before starting the drx-onDurationTimer
(3) SL drx-InactivityTimer: the duration after the PSCCH occasion in which a PSCCH indicates a new SL transmission for the MAC entity
(4) SL drx-RetransmissionTimer (per sidelink process): the maximum duration until a retransmission is received
(5) SL drx-HARQ-RTT-Timer (per sidelink process): the minimum duration before PSCCH (Sidelink Control Information) & PSSCH for SL HARQ retransmission is expected by the MAC entity
(6) SL drx-LongCycleStartOffset: the Long DRX cycle and drx-StartOffset which defines the subframe where the Long and Short DRX Cycle starts
(7) SL drx-ShortCycle (optional): the Short DRX cycle
(8) SL drx-ShortCycleTimer (optional): the duration the UE shall follow the Short DRX cycle
(9) SL drx-HARQ-RTT-Timer (per sidelink process): the minimum duration before an assignment for HARQ retransmission is expected by the MAC entity

The following SL DRX timer referred to in the present disclosure may be used for the following purposes.

(1) SL DRX on-duration timer: the duration in which a UE performing the SL DRX operation should basically operate in an active time for PSCCH/PSSCH reception of a counterpart UE
(2) SL DRX inactivity timer: the duration in which a UE performing the SL DRX operation extends the SL DRX on-duration period, which is the duration in which the UE should basically operate in an active time for PSCCH/PSSCH reception of a counterpart UE

For example, the UE may extend the SL DRX on-duration timer by the SL DRX inactivity timer duration. Also, if the UE receives a new packet (e.g., new PSSCH transmission) from the counterpart UE, the UE may extend the SL DRX on-duration timer by starting the SL DRX inactivity timer.

For example, the SL DRX inactivity timer may be used to extend the duration of the SL DRX on-duration timer, which is the duration in which the RX UE performing the SL DRX operation should basically operate in an active time for PSCCH/PSSCH reception of a counterpart TX UE. That is, the SL DRX on-duration timer may be extended by the duration of the SL DRX inactivity timer. In addition, if the RX UE receives a new packet (e.g., new PSSCH transmission) from the counterpart TX UE, the RX UE may extend the SL DRX on-duration timer by starting the SL DRX inactivity timer.

(3) SL DRX HARQ RTT Timer: the duration in which a UE performing the SL DRX operation operates in a sleep mode until the UE receives a retransmission packet (or PSSCH assignment) transmitted by a counterpart UE

For example, if the UE starts the SL DRX HARQ RTT timer, the UE may determine that the counterpart UE will not transmit a sidelink retransmission packet to the UE until the SL DRX HARQ RTT timer expires, and the UE may operate in a sleep mode while the corresponding timer is running. For example, if the UE starts the SL DRX HARQ RTT timer, the UE may not monitor the sidelink retransmission packet from the counterpart UE until the SL DRX HARQ RTT timer expires. For example, if the RX UE which has received a PSCCH/PSSCH transmitted by the TX UE transmits SL HARQ NACK feedback, the RX UE may start the SL DRX HARQ RTT timer. In this case, the RX UE may determine that the counterpart TX UE will not transmit a sidelink retransmission packet to the RX UE until the SL DRX HARQ RTT timer expires, and the RX UE may operate in a sleep mode while the corresponding timer is running.

(4) SL DRX retransmission timer: the timer which starts when the SL DRX HARQ RTT timer expires, and the duration in which a UE performing the SL DRX operation operates in an active time to receive a retransmission packet (or PSSCH assignment) transmitted by a counterpart UE

For example, during the corresponding timer duration, the UE may receive or monitor the retransmission sidelink packet (or PSSCH assignment) transmitted by the counterpart UE. For example, the RX UE may receive or monitor a retransmission sidelink packet (or PSSCH assignment) transmitted by the counterpart TX UE while the SL DRX retransmission timer is running.

In the present disclosure, the names of timers (Sidelink DRX Onduration Timer, Sidelink DRX Inactivity Timer, Sidelink DRX HARQ RTT Timer, Sidelink DRX Retransmission Timer, etc.) are exemplary, and a timer performing the same/similar function based on the description of each timer may be regarded as the same/similar timer regardless of its name.

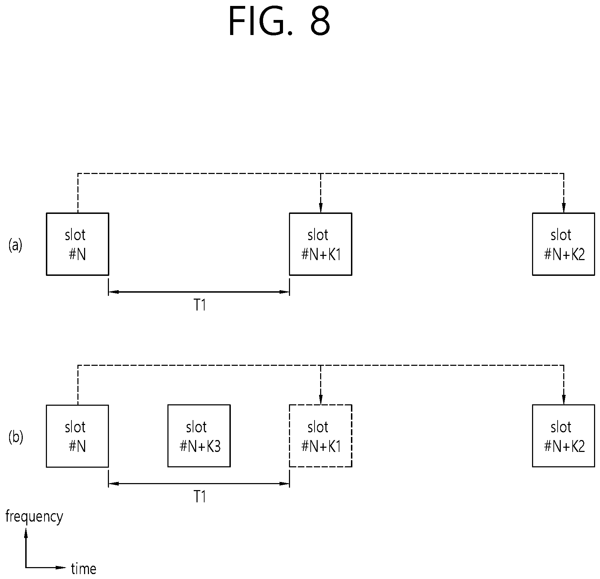

Meanwhile, when the TX UE performs resource reselection based on pre-emption, if the TX UE performs resource reselection without any time domain restrictions, the problem shown in FIG. 8 may occur.

FIG. 8 is a diagram to show a problem that may occur in resource reselection based on pre-emption.

Referring to (a) of FIG. 8, the TX UE may transmit SCI in the slot #N. Herein, the SCI may include information related to resources in the slot #N+K1 and the slot #N+K2. In this case, the RX UE receiving the SCI may determine that the resources in the slot #N+K1 and the slot #N+K2 are reserved by the TX UE. Furthermore, if the RX UE is a UE performing the SL DRX operation, the RX UE may not expect any transmission by the TX UE in the time domain between the slot #N and the slot #N+K1 (i.e., T1 duration), and the RX UE may operate in a sleep mode in the T1 duration.

Thereafter, it is assumed that the TX UE reselects the resource in the slot #N+K1 to the resource in the slot #N+K3 based on pre-emption, as shown in embodiment (b) of FIG. 8. In this case, the RX UE cannot monitor a PSCCH from the TX UE because the RX UE may be operating in the sleep mode in the T1 duration. This may degrade the reliability of SL communication.

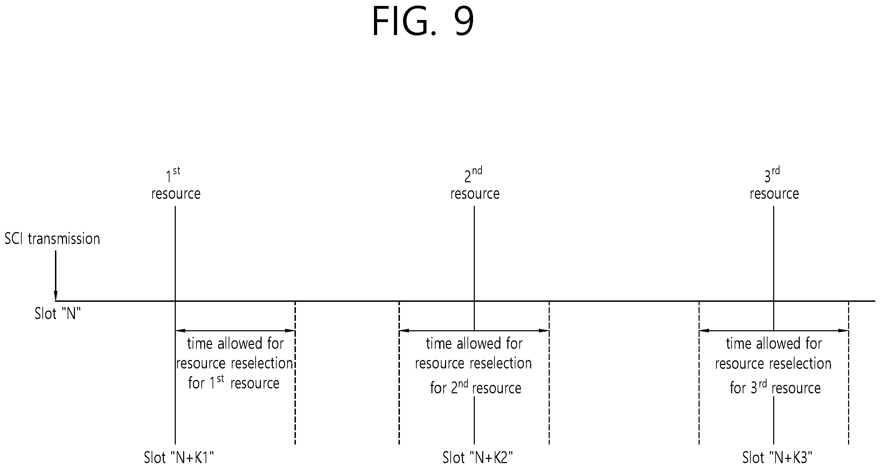

FIG. 9 shows resource (re)selection, resource reservation through SCI, and SCI transmission including reserved resources of a TX UE, based on an embodiment of the present disclosure. The embodiment of FIG. 9 may be combined with various embodiments of the present disclosure.

Referring to FIG. 9, the TX UE may reserve three transmission resource locations for PSSCH transmission to the RX UE through SCI. If the TX UE reselects a transmission resource reserved through the SCI transmitted to the RX UE due to re-evaluation and/or pre-emption, etc., the TX UE may include information on the reselected transmission resource in SCI and transmit it again. In this case, the TX UE may reselect resources for the transmission resources ($1^{st}$ resource, $2^{nd}$ resource, $3^{rd}$ resource) reserved through the prior (original) SCI as shown in the embodiment of FIG. 9. That is, if the TX UE performs resource reselection for the $1^{st}$ resource due to re-evaluation and/or pre-emption, etc., the TX UE may reselect the resource from and after the $1^{st}$ resource time (slot N+K1) indicated in the transmitted SCI. Furthermore, if the TX UE performs resource reselection for the $2^{nd}$ resource due to re-evaluation and/or pre-emption, etc., the TX UE may reselect the resource from and before/after the $2^{nd}$ resource time (slot N+K2) indicated in the transmitted SCI. Furthermore, if the TX UE performs resource reselection for the $3^{rd}$ resource due to re-evaluation and/or pre-emption, etc., the TX UE may reselect the resource from and before/after the $3^{rd}$ resource time (slot N+K3) indicated in the transmitted SCI.

As shown in the embodiment of FIG. 9, for re-evaluation and/or pre-emption operations, the first resource (on the slot N+K1) signaled by the prior SCI (on the slot N) can be reselected only with resources from and after the first resource, and the second resource (on the slot N+K2) signaled by the prior SCI (on the slot N) can be reselected with resources from and before/after the second resource.

In particular, in the case of pre-emption, since the TX UE performs reselection for a resource that has already been signaled by SCI, the reselected resource shall be located in the time domain of the previously signaled resource or after the time domain of the previously signaled resource to ensure reliability for other UEs. In other words, if the TX UE reselects a first SL resource to a second SL resource based on pre-emption, it is not allowed for the second SL resource to be ahead of the first SL resource in the time domain.

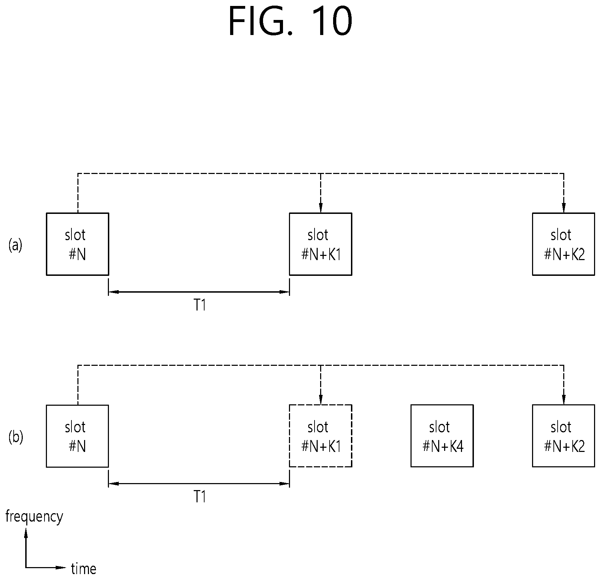

FIG. 10 shows a method for a TX UE to perform resource reselection based on pre-emption, based on an embodiment of the present disclosure. The embodiment of FIG. 10 may be combined with various embodiments of the present disclosure.

Referring to (a) of FIG. 10, the TX UE may transmit SCI in the slot #N. Herein, the SCI may include information related to resources in the slot #N+K1 and the slot #N+K2. In this case, the RX UE receiving the SCI may determine that the resources in the slot #N+K1 and the slot #N+K2 are reserved by the TX UE. Additionally, if the RX UE is a UE performing the SL DRX operation, the RX UE may not expect any transmission by the TX UE in the time domain between the slot #N and the slot #N+K1 (i.e., T1 duration), and the RX UE may operate in a sleep mode in the T1 duration. Thereafter, it is assumed that the TX UE performs resource reselection for the resource in the slot #N+K1 based on pre-emption. In this case, the TX UE shall reselect the resource in the slot #N+K1 to a resource in the slot #N+K1 or a resource after the slot #N+K1 (e.g., a resource in the slot #N+K4), as shown in the embodiment of (b) of FIG. 10. In other words, the TX UE is not allowed to reselect the resource in the slot #N+K1 to a resource before the slot #N+K1. In this case, even though the RX UE is operating in the sleep mode in the T1 duration, the RX UE can monitor a PSCCH from the TX UE in the slot #N+K4. Thus, the power saving gain of the RX UE can be maximized while ensuring the reliability of SL communication.

Considering the methods described above, the following operations are proposed for the RX UE supporting SL DRX to perform reception on the reselected resource based on re-evaluation and/or pre-emption. The methods and/or procedures proposed below may be combined with each other.

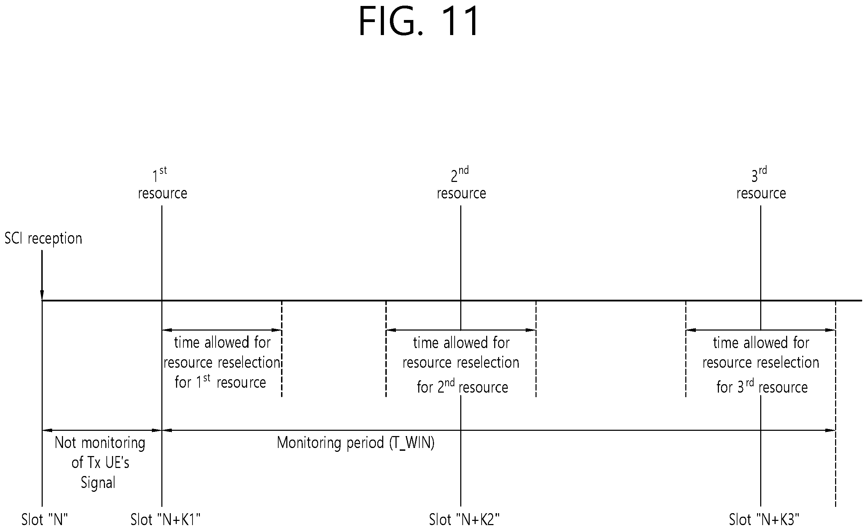

FIG. 11 shows a SL DRX operation of an RX UE according to a resource reselection procedure due to re-evaluation and/or pre-emption operations of a TX UE, based on an embodiment of the present disclosure. The embodiment of FIG. 11 may be combined with various embodiments of the present disclosure.

Referring to FIG. 11, after a time when prior SCI is successfully received and before a time of the first resource (from the slot N to the slot N+K1 in the embodiment of FIG. 11), the RX UE may not perform any monitoring operation for signals or SL channels (e.g., PSCCH, PSSCH, etc.) transmitted by the TX UE, or the RX UE may not perform any monitoring operation related to the associated SL process for SL communication with the TX UE (e.g., receiving retransmission-related signals/packets from the TX UE). In addition, the RX UE may perform additional monitoring operations by considering the possibility that the first/second/third resources signaled by the prior SCI are reselected during a preconfigured time window interval (e.g., T_WIN in the embodiment of FIG. 11, which may be defined in the form of a timer) from the time of the first resource.

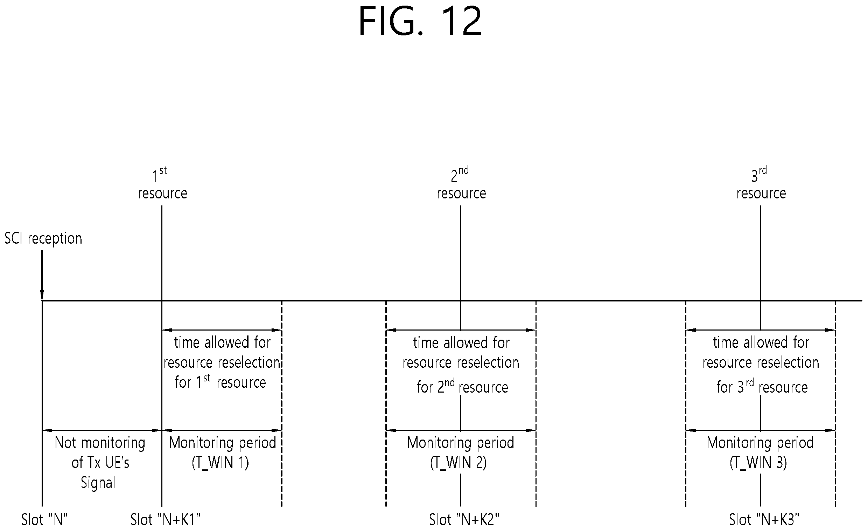

FIG. 12 shows a SL DRX operation of an RX UE according to a resource reselection procedure due to re-evaluation and/or pre-emption operations of a TX UE, based on an embodiment of the present disclosure. The embodiment of FIG. 12 may be combined with various embodiments of the present disclosure.

Referring to FIG. 12, after a time when prior SCI is successfully received and before a time of the first resource (from the slot N to the slot N+K1 in the embodiment of FIG. 12), the RX UE may not perform any monitoring operation for signals or SL channels (e.g., PSCCH, PSSCH, etc.) transmitted by the TX UE, or the RX UE may not perform any monitoring operation related to the associated SL process for SL communication with the TX UE (e.g., receiving retransmission-related signals/packets from the TX UE). In addition, the RX UE may perform additional monitoring operations by considering the possibility that the first resource is reselected during a (pre-configured) time window interval (T _WIN1) from the time of the first resource (slot N+K1), and the RX UE may perform additional monitoring operations by considering the possibility that the second resource is reselected during a (pre-configured) time window interval (T _WIN2) including a time of the second resource (slot N+K2) signaled by the prior SCI and a time before/after the time of the second resource (slot N+K2). In addition, the RX UE may perform additional monitoring operations by considering the possibility that the third resource is reselected during a (pre-configured) time window interval (T_WIN3) including a time of the third resource (slot N+K3) signaled by the prior SCI and a time before/after the time of the third resource (slot N+K3). That is, in the case of the first resource, after the time of the first resource, the RX UE may perform monitoring operations for signals or SL channels (e.g., PSCCH, PSSCH, etc.) transmitted by the TX UE, or the RX UE may perform monitoring operations related to the associated SL process for SL communication with the TX UE (e.g., receiving retransmission-related signals/packets from the TX UE). In addition, in the case of the second/third resources, before/after the time of the second/third resources, the RX UE may perform monitoring operations for signals or SL channels (e.g., PSCCH, PSSCH, etc.) transmitted by the TX UE, or the RX UE may perform monitoring operations related to the associated SL process for SL communication with the TX UE (e.g., receiving retransmission-related signals/packets from the TX UE).

Based on an embodiment of the present disclosure, when performing periodic resource reservation for sidelink communication, the RX UE may perform additional monitoring operations based on the methods described in the embodiment of FIG. 11 and/or the embodiment of FIG. 12, by considering the possibility that transmission resources in the next (or subsequent) period reserved by SCI in the previous period (and/or transmission resources signaled by prior SCI in the same period) may be reselected based on pre-emption and/or re-evaluation. In addition, the monitoring operations for signals or SL channels (e.g., PSCCH, PSSCH, etc.) transmitted by the TX UE or the monitoring operations related to the associated SL process for SL communication with the TX UE (e.g., receiving retransmission-related signals/packets from the TX UE) may be limited (at most) to the corresponding next (or subsequent) period (and/or the same period).

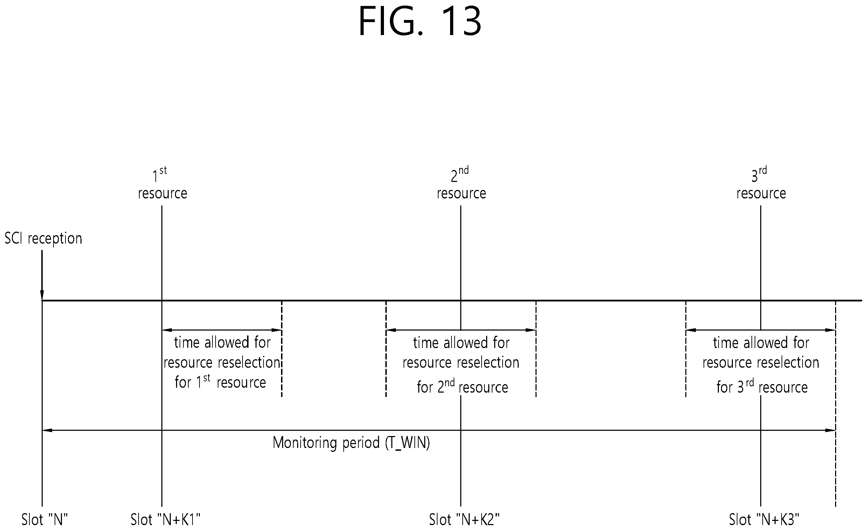

FIG. 13 shows a SL DRX operation of an RX UE according to a resource reselection procedure due to re-evaluation and/or pre-emption operations of a TX UE, based on an embodiment of the present disclosure. The embodiment of FIG. 13 may be combined with various embodiments of the present disclosure.

Referring to FIG. 13, the RX UE may (continuously) restart a timer with a pre-configured value (and/or a time window with a pre-configured length, the T_WIN interval in the embodiment of FIG. 13) based on a reception time when SCI is successfully decoded. Through this, within the interval related to the timer (and/or the time window, the T_WIN interval in the embodiment of FIG. 13), the RX UE may perform monitoring operations for signals or SL channels (e.g., PSCCH, PSSCH, etc.) transmitted by the TX UE, or the RX UE may perform monitoring operations related to the associated SL process for SL communication with the TX UE (e.g., receiving retransmission-related signals/packets from the TX UE). In addition, the TX UE may perform resource reselection based on pre-emption and/or re-evaluation within a timer with a pre-configured value (and/or a time window with a pre-configured length, the T_WIN interval in the embodiment of FIG. 13) based on a transmission time of SCI.

If the proposed method of the present disclosure is applied, the TX UE may be interpreted/configured to limitedly perform resource reselection (related to a specific resource) within a time window (related to the specific resource signaled by prior SCI) that is further monitored by the RX UE.

Table 12 shows a method or a procedure for the TX UE to perform the SL HARQ operation.

[Table 12]

| Sidelink Process (Sidelink Process ID): |
|---|

(continued)

| Sidelink transmission information: Sidelink transmission information included in a SCI for a SL-SCH transmission as specified in clause 8.3 and 8.4 of TS 38.212 [9] consists of Sidelink HARQ information including NDI, RV, Sidelink process ID, HARQ feedback enabled/disabled indicator, Sidelink identification information including cast type indicator, Source Layer-1 ID and Destination Layer-1 ID, and Sidelink other information including CSI request, a priority, a communication range requirement and Zone ID. Sidelink HARQ operation |
|---|
| 5.22.1.3.1 Sidelink HARQ Entity<br>The MAC entity includes at most one Sidelink HARQ entity for transmission on SL-SCH, which maintains a number of parallel Sidelink processes.<br>The maximum number of transmitting Sidelink processes associated with the Sidelink HARQ Entity is 16. A sidelink process may be configured for transmissions of multiple MAC PDUs. For transmissions of multiple MAC PDUs with Sidelink resource allocation mode 2, the maximum number of transmitting Sidelink processes associated with the Sidelink HARQ Entity is 4.<br>A delivered sidelink grant and its associated Sidelink transmission information are associated with a Sidelink process. Each Sidelink process supports one TB.<br>For each sidelink grant, the Sidelink HARQ Entity shall:<br>1> if the MAC entity determines that the sidelink grant is used for initial transmission as specified in clause 5.22.1.1; or<br>1> if the sidelink grant is a configured sidelink grant and no MAC PDU has been obtained in a *sl-PeriodCG* of the configured sidelink grant:<br>NOTE 1: Void.<br>2> (re-)associate a Sidelink process to this grant, and for the associated Sidelink process:<br>NOTE 1A: The Sidelink HARQ Entity will associate the selected sidelink grant to the Sidelink process determined by the MAC entity.<br>3> obtain the MAC PDU to transmit from the Multiplexing and assembly entity, if any;<br>3> if a MAC PDU to transmit has been obtained:<br>4> if a HARQ Process ID has been set for the sidelink grant:<br>5> (re-)associate the HARQ Process ID corresponding to the sidelink grant to the Sidelink process;<br>NOTE 1a: There is one-to-one mapping between a HARQ Process ID and a Sidelink process in the MAC entity configured with Sidelink resource allocation mode 1.<br>4> determines Sidelink transmission information of the TB for the source and destination pair of the MAC PDU as follows:<br>5> set the Source Layer-1 ID to the 8 LSB of the Source Layer-2 ID of the MAC PDU;<br>5> set the Destination Layer-1 ID to the 16 LSB of the Destination Layer-2 ID of the MAC PDU;<br>5> (re-)associate the Sidelink process to a Sidelink process ID;<br>NOTE 1b:How UE determine Sidelink process ID in SCI is left to UE implementation for NR sidelink.<br>5> consider the NDI to have been toggled compared to the value of the previous transmission corresponding to the Sidelink identification information and the Sidelink process ID of the MAC PDU and set the NDI to the toggled value; |

Table 13 shows a method or a procedure for the RX UE to perform the SL HARQ operation.

[Table 13]

| 5.22.2.2.1 Sidelink HARQ Entity |
|---|

(continued)

There is at most one Sidelink HARQ Entity at the MAC entity for reception of the SL-SCH, which maintains a number of parallel Sidelink processes.

Each Sidelink process is associated with SCI in which the MAC entity is interested. This interest is determined by the Sidelink identification information of the SCI. The Sidelink HARQ Entity directs Sidelink transmission information and associated TBs received on the SL-SCH to the corresponding Sidelink processes.

The number of Receiving Sidelink processes associated with the Sidelink HARQ Entity is defined in TS 38.306 [5].

For each PSSCH duration, the Sidelink HARQ Entity shall:

1> for each SCI valid for this PSSCH duration:

2> if the NDI has been toggled compared to the value of the previous received transmission corresponding to the Sidelink identification information and the Sidelink process ID of the SCI or this is the very first received transmission for the pair of the Sidelink identification information and the Sidelink process ID of the SCI:

3> if there is a Sidelink process associated with the Sidelink identification information and the Sidelink process ID of the SCI:

4> consider the Sidelink process as unoccupied;

4> flush the soft buffer for the Sidelink process.

3> allocate the TB received from the physical layer and the associated Sidelink identification information and Sidelink process ID to an unoccupied Sidelink process;

3> associate the Sidelink process with the Sidelink identification information and the Sidelink process ID of this SCI and consider this transmission to be a new transmission.

NOTE 1: When a new TB arrives, the Sidelink HARQ Entity allocates the TB to any unoccupied Sidelink process. If there is no unoccupied Sidelink process in the Sidelink HARQ entity, how to manage receiving Sidelink processes is up to UE implementation.

1> for each Sidelink process:

2> if the NDI has not been toggled compared to the value of the previous received transmission corresponding to the Sidelink identification information and the Sidelink process ID of the SCI for the Sidelink process according to its associated SCI:

3> allocate the TB received from the physical layer to the Sidelink process and consider this transmission to be a retransmission.

NOTE 2: A single sidelink process can only be (re-)associated to a single combination of Sidelink identification information and Sidelink process ID at a time and a single combination of Sidelink identification information and Sidelink process ID can only be (re-)associated to a single sidelink process at a time.

Based on an embodiment of the present disclosure, if transmission resource reselection by pre-emption and/or re-evaluation occurs, the following SL DRX operation may be performed.

For example, if transmission resource reselection by pre-emption and/or re-evaluation occurs, the TX UE may indicate through SCI (new SCI including information related to the reselected transmission resource, if the TX UE has reselected the transmission resource by pre-emption and/or re-evaluation) that it is a pre-empted resource. For example, if the TX UE reselects a transmission resource due to pre-emption and/or re-evaluation, the TX UE may transmit new SCI including information related to the reselected transmission resource with information representing that the reselected transmission resource is a pre-empted resource. In addition, the TX UE may transmit, to the RX UE through the SCI, a SL DRX timer (e.g., a retransmission timer/inactivity timer or a SL DRX timer to operate as an active time) reset offset.

- SL DRX timer reset offset: an offset indicating when to restart the DRX timer.

If the RX UE receives pre-empted SCI (if the TX UE reselects a transmission resource due to pre-emption/re-evaluation, the new SCI including information related to the reselected transmission resource, also including the pre-empted indication) transmitted by the TX UE, the RX UE may stop an existing running SL DRX timer (SL DRX timer to operates as an active time (e.g., SL DRX on-duration timer/SL DRX inactivity timer/SL DRX retransmission timer or other SL DRX timers to operate as an active time) or SL DRX HARQ RTT timer), and the RX UE may restart the SL DRX timer at a time (offset) indicated by the pre-empted SCI. Before the SL DRX timer reset offset, the RX UE may not perform any monitoring operation for signals or SL channels (e.g., PSCCH, PSSCH, etc.) transmitted by the TX UE, or the RX UE may not perform any monitoring operation related to the associated SL process for SL communication with the TX UE (e.g., receiving retransmission-related signals/packets from the TX UE).

The above-described proposals of the present disclosure may be applied and extended not only to single MAC PDU transmission, but also to multiple MAC PDU transmission (e.g., a case where SCI indicates periodic resource reservation). At resources of each periodicity, the proposals of the present disclosure may be equally applicable.

In the proposals of the present disclosure, a resource reselected by the TX UE due to re-evaluation and/or pre-emption (e.g., the reselected resource located before or after the location of a resource indicated by prior SCI) may be included in a SL DRX inactive time of the RX UE (e.g., the duration during which the RX UE does not perform any monitoring operation for a PSCCH/PSSCH for sidelink data transmitted by the TX UE). For example, if the TX UE transmits a PSCCH/PSSCH by using the reselected resource and DTX occurs (no feedback for the transmitted PSCCH/PSSCH), the TX UE may determine that the reselected transmission resource is a resource that is included in the SL DRX inactive time of the RX UE. For example, if the reselected resource of the TX UE due to re-evaluation and/or pre-emption is included in the SL DRX inactive time of the RX UE, the reliability of SL communication may not be guaranteed due to SL communication based on the reselected resource. Therefore, for example, if the reselected resource of the TX UE due to re-evaluation and/or pre-emption is included in the SL DRX inactive time of the RX UE, the TX UE may trigger a resource reselection procedure to reselect the resource. For example, if the reselected resource of the TX UE due to re-evaluation and/or pre-emption is included in the SL DRX inactive time of the RX UE, the TX UE may trigger a resource reselection procedure to reselect the resource such that the resource can be included in the SL DRX active time of the RX UE (the duration during which the RX UE performs monitoring operations for a PSCCH/PSSCH for sidelink data transmitted by the TX UE).

Based on various embodiments of the present disclosure, if the reselected resource is outside the active time of the RX UE due to pre-emption and/or re-evaluation, the TX UE can quickly trigger the resource reselection procedure to ensure reliability of the SL communication. Furthermore, when the TX UE performs resource reselection based on pre-emption, it can maximize the power saving gain of the RX UE while ensuring the reliability of SL communication by restricting the reselected resource from getting ahead of the existing resource in the time domain.

The proposal of the present disclosure can be applied/extended to/as UE-pair specific SL DRX configuration(s), UE-pair specific SL DRX pattern(s) or parameter(s) (e.g., timer) included in UE-pair specific SL DRX configuration(s), as well as default/common SL DRX configuration(s), default/common SL DRX pattern(s), or parameter(s) (e.g., timer) included in default/common SL DRX configuration(s). In addition, the on-duration mentioned in the proposal of the present disclosure may be extended to or interpreted as an active time (e.g., time to wake-up state (e.g., RF module turned on) to receive/transmit radio signal(s)) duration, and the off-duration may be extended to or interpreted as a sleep time (e.g., time to sleep in sleep mode state (e.g., RF module turned off) to save power) duration. It does not mean that the TX UE is obligated to operate in the sleep mode in the sleep time duration. If necessary, the TX UE may be allowed to operate in an active time for a while for a sensing operation and/or a transmission operation, even if it is a sleep time.

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2).

For example, whether or not the proposed rule of the present disclosure is applied and/or related parameter configuration value(s) may be configured (differently or independently) for each resource pool. For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or pre-emption-based resource reselection. For example, whether or not the proposed rule of the present disclosure is applied and/or related parameter configuration value(s) may be configured specifically (or differently or independently) for re-evaluation or re-evaluation-based resource reselection. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each direction of a pair of source layer ID and destination layer ID. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) for the case of performing SL DRX. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation.

The certain time mentioned in the proposal of the present disclosure may refer to a time during which a UE operates in an active time for a pre-defined time in order to receive sidelink signal(s) or sidelink data from a counterpart UE. The certain time mentioned in the proposal of the present disclosure may refer to a time during which a UE operates in an active time as long as a specific timer (e.g., sidelink DRX retransmission timer, sidelink DRX inactivity timer, or timer to ensure that an RX UE can operate in an active time in a DRX operation of the RX UE) is running in order to receive sidelink signal(s) or sidelink data from a counterpart UE. In addition, the proposal and whether or not the proposal rule of the present disclosure is applied (and/or related parameter configuration value(s)) may also be applied to a mmWave SL operation.

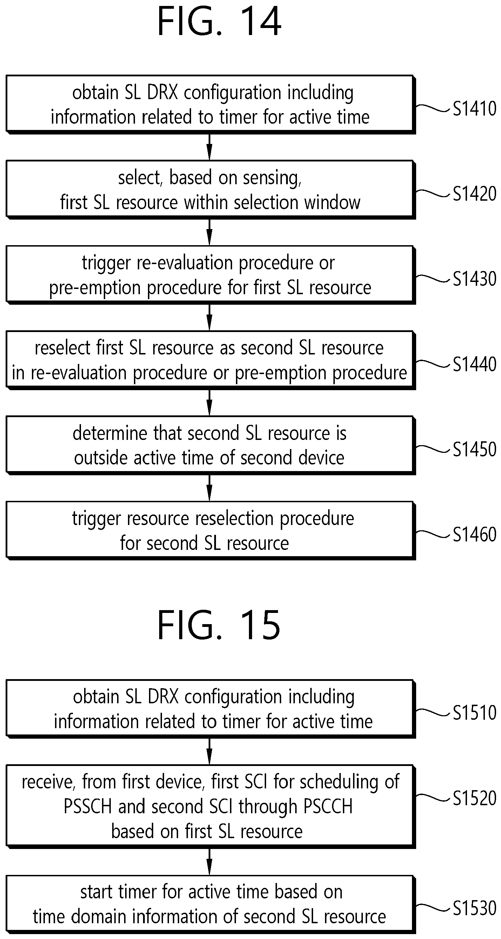

FIG. 14 shows a method for a first device to perform wireless communication, based on an embodiment of the present disclosure. The embodiment of FIG. 14 may be combined with various embodiments of the present disclosure.

Referring to FIG. 14, in step S1410, the first device may obtain a sidelink (SL) discontinuous reception (DRX) configuration including information related to a timer for an active time. In step S1420, the first device may select, based on sensing, a first SL resource within a selection window. In step S1430, the first device may trigger a re-evaluation procedure or a pre-emption procedure for the first SL resource. In step S1440, the first device may reselect the first SL resource as a second SL resource in the re-evaluation procedure or the pre-emption procedure. In step S1450, the first device may determine that the second SL resource is outside the active time of a second device. In step S1460, the first device may trigger a resource reselection procedure for the second SL resource.

For example, based on that the second SL resource is outside the active time of the second device, the resource reselection procedure for the second SL resource may be triggered by the first device.

Additionally, for example, the first device may reselect the second SL resource as a third SL resource in the resource reselection procedure. For example, the third SL resource may be within the active time of the second device. For example, the timer for the active time may include at least one of a SL on-duration timer, a SL inactivity timer, or a SL retransmission timer. For example, the active time may be a time while at least one of the SL on-duration timer, the SL inactivity timer, or the SL retransmission timer is running. For example, the active time may be a time domain of a resource reserved through prior sidelink control information (SCI).

Additionally, for example, the first device may obtain information related to a set of resource blocks (RBs) for physical sidelink feedback channel (PSFCH) reception. Additionally, for example, the first device may transmit, to the second device, first sidelink control information (SCI) for scheduling of a physical sidelink shared channel (PSSCH) and second SCI through a physical sidelink control channel (PSCCH) based on the second resource. Additionally, for example, the first device may transmit, to the second device, the second SCI including a source ID of the first device and a medium access control (MAC) protocol data unit (PDU) through the PSSCH based on the second resource. Additionally, for example, the first device may allocate at least one RB among the set of RBs to the PSSCH. Additionally, for example, the first device may determine, based on the source ID of the first device, an index of a PSFCH resource for PSFCH reception among the at least one RB. For example, based on absence of PSFCH reception on the PSFCH resource, the first device may determine that the second SL resource is outside the active time of the second device.

For example, based on that the first SL resource is reselected as the second SL resource in the pre-emption procedure, the second SL resource may be in a time domain of the first SL resource or in a time domain after the first SL resource.

For example, based on that the first SL resource is reselected as the second SL resource in the pre-emption procedure, the second SL resource may not be allowed to be located before the first SL resource in a time domain.

Additionally, for example, the first device may transmit, based on a second slot before a first slot including the first SL resource, sidelink control information (SCI) through a physical sidelink control channel (PSCCH). For example, the SCI may include time domain information and frequency domain information of the first SL resource.

Additionally, for example, the first device may determine that a time from a time domain of the first SL resource to a time domain of the second SL resource is the active time of the second device.

For example, based on that the first SL resource is reselected as the second SL resource in the re-evaluation procedure, the second SL resource may be in a time domain of the first SL resource, a time domain before the first SL resource, or a time domain after the first SL resource.

Additionally, for example, the first device may transmit, to the second device, sidelink control information (SCI) including information representing that the second SL resource is a resource reselected in the re-evaluation procedure or the pre-emption procedure. For example, the SCI may further include information related to an offset for resetting the timer for the active time. For example, the timer for the active time may be stopped based on the SCI, and the timer for the active time is restarted after the offset.

The proposed method may be applied to the device(s) based on various embodiments of the present disclosure. First, the processor 102 of the first device 100 may obtain a sidelink (SL) discontinuous reception (DRX) configuration including information related to a timer for an active time. In addition, the processor 102 of the first device 100 may select, based on sensing, a first SL resource within a selection window. In addition, the processor 102 of the first device 100 may trigger a re-evaluation procedure or a pre-emption procedure for the first SL resource. In addition, the processor 102 of the first device 100 may reselect the first SL resource as a second SL resource in the re-evaluation procedure or the pre-emption procedure. In addition, the processor 102 of the first device 100 may determine that the second SL resource is outside the active time of a second device. In addition, the processor 102 of the first device 100 may trigger a resource reselection procedure for the second SL resource.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers. For example, the one or more processors may execute the instructions to: obtain a sidelink (SL) discontinuous reception (DRX) configuration including information related to a timer for an active time; select, based on sensing, a first SL resource within a selection window; trigger a re-evaluation procedure or a pre-emption procedure for the first SL resource; reselect the first SL resource as a second SL resource in the re-evaluation procedure or the pre-emption procedure; determine that the second SL resource is outside the active time of a second device; and trigger a resource reselection procedure for the second SL resource.

Based on an embodiment of the present disclosure, an apparatus adapted to control a first user equipment (UE) may be provided. For example, the apparatus may comprise: one or more processors; and one or more memories operably connected to the one or more processors and storing instructions. For example, the one or more processors may execute the instructions to: obtain a sidelink (SL) discontinuous reception (DRX) configuration including information related to a timer for an active time; select, based on sensing, a first SL resource within a selection window; trigger a re-evaluation procedure or a pre-emption procedure for the first SL resource; reselect the first SL resource as a second SL resource in the re-evaluation procedure or the pre-emption procedure; determine that the second SL resource is outside the active time of a second UE; and trigger a resource reselection procedure for the second SL resource.

Based on an embodiment of the present disclosure, a non-transitory computer-readable storage medium storing instructions may be provided. For example, the non-transitory computer-readable storage medium storing instructions, when executed, may cause a first device to: obtain a sidelink (SL) discontinuous reception (DRX) configuration including information related to a timer for an active time; select, based on sensing, a first SL resource within a selection window; trigger a re-evaluation procedure or a pre-emption procedure for the first SL resource; reselect the first SL resource as a second SL resource in the re-evaluation procedure or the pre-emption procedure; determine that the second SL resource is outside the active time of a second device; and trigger a resource reselection procedure for the second SL resource.

FIG. 15 shows a method for a second device to perform wireless communication, based on an embodiment of the present disclosure. The embodiment of FIG. 15 may be combined with various embodiments of the present disclosure.

Referring to FIG. 15, in step S1510, the second device may obtain a sidelink (SL) discontinuous reception (DRX) configuration including information related to a timer for an active time. In step S1520, the second device may receive, from a first device, first sidelink control information (SCI) for scheduling of a physical sidelink shared channel (PSSCH) and second SCI through a physical sidelink control channel (PSCCH) based on a first SL resource. For example, the first SCI may include time domain information and frequency domain information of a second SL resource. In step S1530, the second device may start the timer for the active time based on the time domain information of the second SL resource. For example, the second device may not monitor transmission from the first device in a time domain between the first SL resource and the second SL resource.

The proposed method may be applied to the device(s) based on various embodiments of the present disclosure. First, the processor 202 of the second device 200 may obtain a sidelink (SL) discontinuous reception (DRX) configuration including information related to a timer for an active time. In addition, the processor 202 of the second device 200 may control the transceiver 206 to receive, from a first device, first sidelink control information (SCI) for scheduling of a physical sidelink shared channel (PSSCH) and second SCI through a physical sidelink control channel (PSCCH) based on a first SL resource. For example, the first SCI may include time domain information and frequency domain information of a second SL resource. In addition, the processor 202 of the second device 200 may start the timer for the active time based on the time domain information of the second SL resource. For example, the second device may not monitor transmission from the first device in a time domain between the first SL resource and the second SL resource.

Based on an embodiment of the present disclosure, a second device adapted to perform wireless communication may be provided. For example, the second device may comprise: one or more memories storing instructions; one or more transceivers; and one or more processors connected to the one or more memories and the one or more transceivers. For example, the one or more processors may execute the instructions to: obtain a sidelink (SL) discontinuous reception (DRX) configuration including information related to a timer for an active time; receive, from a first device, first sidelink control information (SCI) for scheduling of a physical sidelink shared channel (PSSCH) and second SCI through a physical sidelink control channel (PSCCH) based on a first SL resource, wherein the first SCI includes time domain information and frequency domain information of a second SL resource; and start the timer for the active time based on the time domain information of the second SL resource. For example, the second device may not monitor transmission from the first device in a time domain between the first SL resource and the second SL resource.

Based on an embodiment of the present disclosure, an apparatus adapted to control a second user equipment (UE) may be provided. For example, the apparatus may comprise: one or more processors; and one or more memories operably connected to the one or more processors and storing instructions. For example, the one or more processors may execute the instructions to: obtain a sidelink (SL) discontinuous reception (DRX) configuration including information related to a timer for an active time; receive, from a first UE, first sidelink control information (SCI) for scheduling of a physical sidelink shared channel (PSSCH) and second SCI through a physical sidelink control channel (PSCCH) based on a first SL resource, wherein the first SCI includes time domain information and frequency domain information of a second SL resource; and start the timer for the active time based on the time domain information of the second SL resource. For example, the second UE may not monitor transmission from the first UE in a time domain between the first SL resource and the second SL resource.

Based on an embodiment of the present disclosure, a non-transitory computer-readable storage medium storing instructions may be provided. For example, the non-transitory computer-readable storage medium storing instructions, when executed, may cause a second device to: obtain a sidelink (SL) discontinuous reception (DRX) configuration including information related to a timer for an active time; receive, from a first device, first sidelink control information (SCI) for scheduling of a physical sidelink shared channel (PSSCH) and second SCI through a physical sidelink control channel (PSCCH) based on a first SL resource, wherein the first SCI includes time domain information and frequency domain information of a second SL resource; and start the timer for the active time based on the time domain information of the second SL resource. For example, the second device may not monitor transmission from the first device in a time domain between the first SL resource and the second SL resource.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

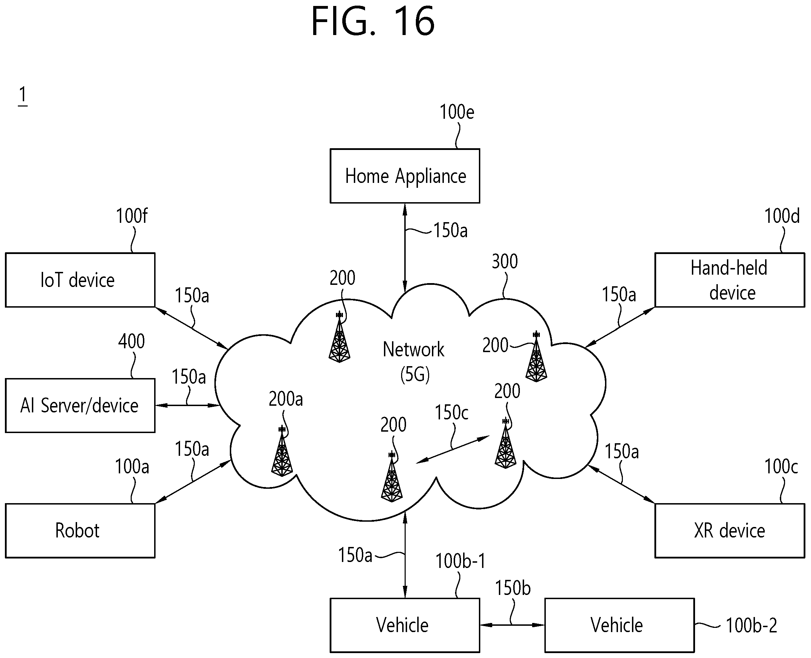

FIG. 16 shows a communication system 1, based on an embodiment of the present disclosure. The embodiment of FIG. 16 may be combined with various embodiments of the present disclosure.

Referring to FIG. 16, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

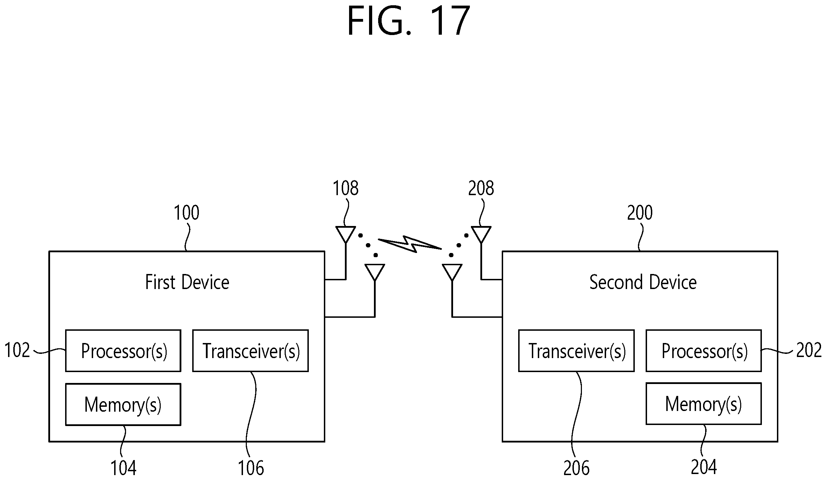

FIG. 17 shows wireless devices, based on an embodiment of the present disclosure. The embodiment of FIG. 17 may be combined with various embodiments of the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

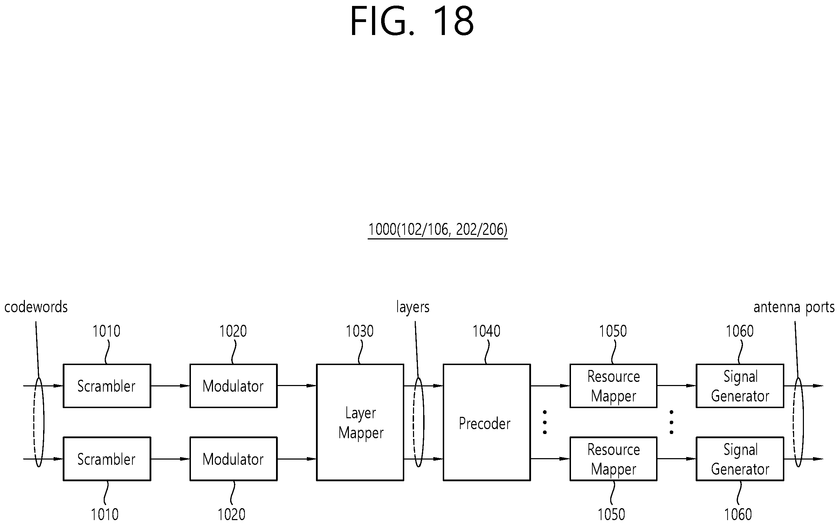

FIG. 18 shows a signal process circuit for a transmission signal, based on an embodiment of the present disclosure. The embodiment of FIG. 18 may be combined with various embodiments of the present disclosure.

Referring to FIG. 18, a signal processing circuit 1000 may include scramblers 1010, modulators 1020, a layer mapper 1030, a precoder 1040, resource mappers 1050, and signal generators 1060. An operation/function of FIG. 18 may be performed, without being limited to, the processors 102 and 202 and/or the transceivers 106 and 206 of FIG. 17. Hardware elements of FIG. 18 may be implemented by the processors 102 and 202 and/or the transceivers 106 and 206 of FIG. 17. For example, blocks 1010 to 1060 may be implemented by the processors 102 and 202 of FIG. 17. Alternatively, the blocks 1010 to 1050 may be implemented by the processors 102 and 202 of FIG. 17 and the block 1060 may be implemented by the transceivers 106 and 206 of FIG. 17.

Codewords may be converted into radio signals via the signal processing circuit 1000 of FIG. 18. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 18. For example, the wireless devices (e.g., 100 and 200 of FIG. 17) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

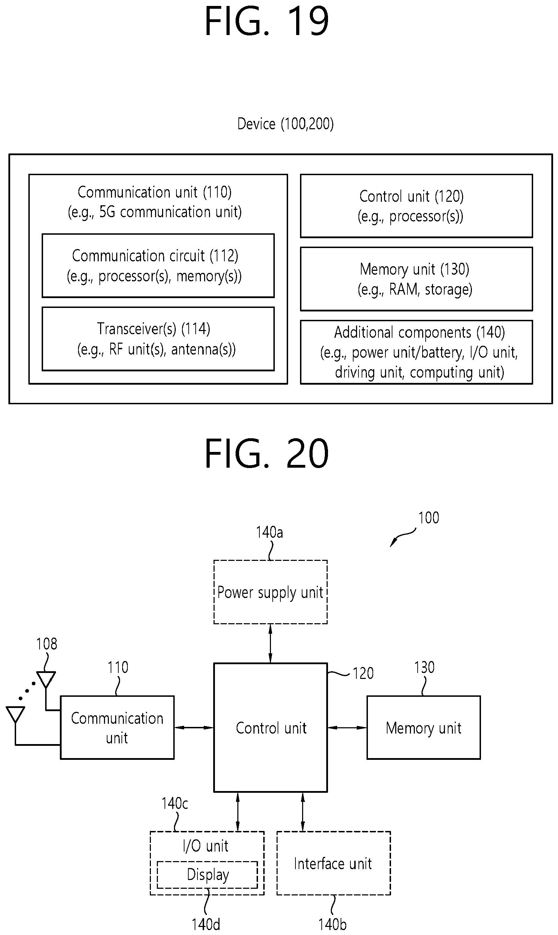

FIG. 19 shows another example of a wireless device, based on an embodiment of the present disclosure. The wireless device may be implemented in various forms according to a use-case/service (refer to FIG. 16). The embodiment of FIG. 19 may be combined with various embodiments of the present disclosure.

Referring to FIG. 19, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 19 will be described in detail with reference to the drawings.

FIG. 20 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 20 may be combined with various embodiments of the present disclosure.

Referring to FIG. 20, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 19, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

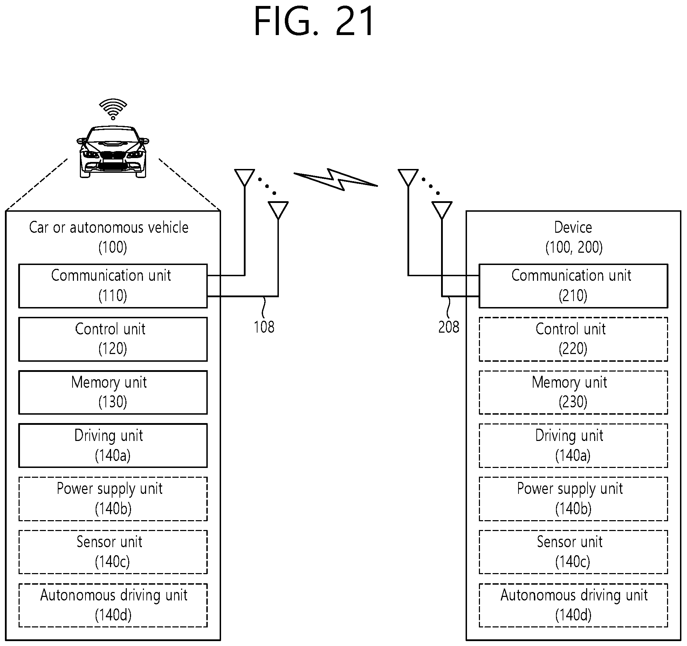

FIG. 21 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 21 may be combined with various embodiments of the present disclosure.

Referring to FIG. 21, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

**1.** A method for performing wireless communication by a first device, the method comprising:

obtaining a sidelink (SL) discontinuous reception (DRX) configuration including information related to a timer for an active time;
selecting, based on sensing, a first SL resource within a selection window;
triggering a re-evaluation procedure or a pre-emption procedure for the first SL resource;
reselecting the first SL resource as a second SL resource in the re-evaluation procedure or the pre-emption procedure;
determining that the second SL resource is outside the active time of a second device; and
triggering a resource reselection procedure for the second SL resource.

**2.** The method of claim 1, wherein, based on that the second SL resource is outside the active time of the second device, the resource reselection procedure for the second SL resource is triggered by the first device.

**3.** The method of claim 1, further comprising:

reselecting the second SL resource as a third SL resource in the resource reselection procedure,
wherein the third SL resource is within the active time of the second device.

**4.** The method of claim 3, wherein the timer for the active time includes at least one of a SL on-duration timer, a SL inactivity timer, or a SL retransmission timer, and
wherein the active time is a time while at least one of the SL on-duration timer, the SL inactivity timer, or the SL retransmission timer is running, or the active time is a time domain of a resource reserved through prior sidelink control information (SCI).

**5.** The method of claim 1, further comprising:

obtaining information related to a set of resource blocks (RBs) for physical sidelink feedback channel (PSFCH) reception;
transmitting, to the second device, first sidelink control information (SCI) for scheduling of a physical sidelink shared channel (PSSCH) and second SCI through a physical sidelink control channel (PSCCH) based on the second resource;
transmitting, to the second device, the second SCI including a source ID of the first device and a medium access control (MAC) protocol data unit (PDU) through the PSSCH based on the second resource;
allocating at least one RB among the set of RBs to the PSSCH; and
determining, based on the source ID of the first device, an index of a PSFCH resource for PSFCH reception among the at least one RB,
wherein, based on absence of PSFCH reception on the PSFCH resource, the first device determines that the second SL resource is outside the active time of the second device.

**6.** The method of claim 1, wherein, based on that the first SL resource is reselected as the second SL resource in the pre-emption procedure, the second SL resource is in a time domain of the first SL resource or in a time domain after the first SL resource.

7. The method of claim 6, wherein, based on that the first SL resource is reselected as the second SL resource in the pre-emption procedure, the second SL resource is not allowed to be located before the first SL resource in a time domain.

8. The method of claim 6, further comprising:

transmitting, based on a second slot before a first slot including the first SL resource, sidelink control information (SCI) through a physical sidelink control channel (PSCCH),
wherein the SCI includes time domain information and frequency domain information of the first SL resource.

9. The method of claim 6, further comprising:
determining that a time from a time domain of the first SL resource to a time domain of the second SL resource is the active time of the second device.

10. The method of claim 1, wherein, based on that the first SL resource is reselected as the second SL resource in the re-evaluation procedure, the second SL resource is in a time domain of the first SL resource, a time domain before the first SL resource, or a time domain after the first SL resource.

11. The method of claim 1, further comprising:
transmitting, to the second device, sidelink control information (SCI) including information representing that the second SL resource is a resource reselected in the re-evaluation procedure or the pre-emption procedure.

12. The method of claim 11, wherein the SCI further includes information related to an offset for resetting the timer for the active time.

13. The method of claim 12, wherein the timer for the active time is stopped based on the SCI, and the timer for the active time is restarted after the offset.

14. A first device adapted to perform wireless communication, the first device comprising:

one or more memories storing instructions;
one or more transceivers; and
one or more processors connected to the one or more memories and the one or more transceivers, wherein the one or more processors execute the instructions to:

obtain a sidelink (SL) discontinuous reception (DRX) configuration including information related to a timer for an active time;
select, based on sensing, a first SL resource within a selection window;
trigger a re-evaluation procedure or a pre-emption procedure for the first SL resource;
reselect the first SL resource as a second SL resource in the re-evaluation procedure or the pre-emption procedure;
determine that the second SL resource is outside the active time of a second device; and
trigger a resource reselection procedure for the second SL resource.

15. An apparatus adapted to control a first user equipment (UE), the apparatus comprising:

one or more processors; and
one or more memories operably connected to the one or more processors and storing instructions, wherein the one or more processors execute the instructions to:

obtain a sidelink (SL) discontinuous reception (DRX) configuration including information related to a timer for an active time;
select, based on sensing, a first SL resource within a selection window;
trigger a re-evaluation procedure or a pre-emption procedure for the first SL resource;
reselect the first SL resource as a second SL resource in the re-evaluation procedure or the pre-emption procedure;
determine that the second SL resource is outside the active time of a second UE; and
trigger a resource reselection procedure for the second SL resource.

**16.** A non-transitory computer-readable storage medium storing instructions that, when executed, cause a first device to:

obtain a sidelink (SL) discontinuous reception (DRX) configuration including information related to a timer for an active time;
select, based on sensing, a first SL resource within a selection window;
trigger a re-evaluation procedure or a pre-emption procedure for the first SL resource;
reselect the first SL resource as a second SL resource in the re-evaluation procedure or the pre-emption procedure;
determine that the second SL resource is outside the active time of a second device; and
trigger a resource reselection procedure for the second SL resource.

**17.** A method for performing wireless communication by a second device, the method comprising:

obtaining a sidelink (SL) discontinuous reception (DRX) configuration including information related to a timer for an active time;
receiving, from a first device, first sidelink control information (SCI) for scheduling of a physical sidelink shared channel (PSSCH) and second SCI through a physical sidelink control channel (PSCCH) based on a first SL resource, wherein the first SCI includes time domain information and frequency domain information of a second SL resource; and
starting the timer for the active time based on the time domain information of the second SL resource,
wherein the second device does not monitor transmission from the first device in a time domain between the first SL resource and the second SL resource.

**18.** A second device adapted to perform wireless communication, the second device comprising:

one or more memories storing instructions;
one or more transceivers; and
one or more processors connected to the one or more memories and the one or more transceivers, wherein the one or more processors execute the instructions to:

obtain a sidelink (SL) discontinuous reception (DRX) configuration including information related to a timer for an active time;
receive, from a first device, first sidelink control information (SCI) for scheduling of a physical sidelink shared channel (PSSCH) and second SCI through a physical sidelink control channel (PSCCH) based on a first SL resource, wherein the first SCI includes time domain information and frequency domain information of a second SL resource; and
start the timer for the active time based on the time domain information of the second SL resource,
wherein the second device does not monitor transmission from the first device in a time domain between the first SL resource and the second SL resource.

**19.** An apparatus adapted to control a second user equipment (UE), the apparatus comprising:

one or more processors; and
one or more memories operably connected to the one or more processors and storing instructions, wherein the one or more processors execute the instructions to:

obtain a sidelink (SL) discontinuous reception (DRX) configuration including information related to a timer for an active time;
receive, from a first UE, first sidelink control information (SCI) for scheduling of a physical sidelink shared channel (PSSCH) and second SCI through a physical sidelink control channel (PSCCH) based on a first SL resource, wherein the first SCI includes time domain information and frequency domain information of a second SL resource; and
start the timer for the active time based on the time domain information of the second SL resource,
wherein the second UE does not monitor transmission from the first UE in a time domain between the first SL resource and the second SL resource.

**20.** A non-transitory computer-readable storage medium storing instructions that, when executed, cause a second device to:

obtain a sidelink (SL) discontinuous reception (DRX) configuration including information related to a timer for an active time;
receive, from a first device, first sidelink control information (SCI) for scheduling of a physical sidelink shared channel (PSSCH) and second SCI through a physical sidelink control channel (PSCCH) based on a first SL resource, wherein the first SCI includes time domain information and frequency domain information of a second SL resource; and
start the timer for the active time based on the time domain information of the second SL resource,
wherein the second device does not monitor transmission from the first device in a time domain between the first SL resource and the second SL resource.

FIG. 1

AMF/UPF
AMF/UPF
30
5GC
NG
NG
NG
NG
20
Xn
gNB
gNB
NG-RAN
Xn
Xn
gNB
10

FIG. 2

UE
SDAP
PDCP
RLC
MAC
PHY

gNB
SDAP
PDCP
RLC
MAC
PHY

(a)

UE
NAS
RRC
PDCP
RLC
MAC
PHY

gNB
RRC
PDCP
RLC
MAC
PHY

AMF
NAS

(b)

UE A
SDAP
PDCP
RLC
MAC
PHY

PC5-U

UE B
SDAP
PDCP
RLC
MAC
PHY

(c)

UE A
RRC
PDCP
RLC
MAC
PHY

PC5-C

UE B
RRC
PDCP
RLC
MAC
PHY

(d)

# FIG. 3

One Frame (10ms)
Half-Frame (5ms)
Half-Frame (5ms)
Subframe 0 (1ms)
Subframe 4 (1ms)
Subframe 5 (1ms)
Subframe 9 (1ms)
Subframe (1ms)
15KHz
Slot 0 (14symbols)
1ms
30KHz
Slot 0 (14symbols)
Slot 1
500us
60KHz
Slot 0 (14symbols)
Slot 1
Slot 2
Slot 3
250us
120KHz
Slot 0 (14symbols)
Slot 1
Slot 2
Slot 3
Slot 4
Slot 5
Slot 6
Slot 7
125us

FIG. 4

Resource grid
k=0
l=0
1 RE
1 symbol
1subcarrier
1RB=12 subcarriers
A BWP
A carrier
(up to 3300 subcarriers,
i.e., 275 RBs)

# FIG. 5

PRB N3
PRB 1
PRB 0
PRB N2
PRB 1
PRB 0
PRB N1
PRB 1
PRB 0
CRB 0
$N^{size}_{BWP,2}$
$N^{size}_{BWP,1}$
$N^{size}_{BWP,0}$
$N^{start}_{BWP,0}$
$N^{start}_{BWP,1}$
$N^{start}_{BWP,2}$
Carrier Bandwidth
Freq.
Time
PRB 0 (Point A) in reference resource block

FIG. 6

BS
first UE
second UE
first UE
second UE
resource scheduling
S600
PSCCH
S610
PSSCH
S620
PSFCH
S630
PUCCH/PUSCH
S640
PSCCH
S610
PSSCH
S620
PSFCH
S630
(a)
(b)

FIG. 7

(a)
(b)
(c)
: TX UE
: RX UE

# FIG. 8

(a)
slot #N
slot #N+K1
slot #N+K2
T1
(b)
slot #N
slot #N+K3
slot #N+K1
slot #N+K2
T1
frequency
time

FIG. 9

SCI transmission
Slot "N"
1st resource
2nd resource
3rd resource
time allowed for resource reselection for 1st resource
time allowed for resource reselection for 2nd resource
time allowed for resource reselection for 3rd resource
Slot "N+K1"
Slot "N+K2"
Slot "N+K3"

FIG. 10

(a)
slot
#N
slot
#N+K1
slot
#N+K2
T1
(b)
slot
#N
slot
#N+K1
slot
#N+K4
slot
#N+K2
T1
frequency
time

FIG. 11

SCI reception
Slot "N"
Not monitoring of Tx UE's Signal
1st resource
Slot "N+K1"
time allowed for resource reselection for 1st resource
Monitoring period (T_WIN)
2nd resource
Slot "N+K2"
time allowed for resource reselection for 2nd resource
3rd resource
Slot "N+K3"
time allowed for resource reselection for 3rd resource

FIG. 12

SCI reception

Slot "N"

Not monitoring of Tx UE's Signal

1st resource

Slot "N+K1"

time allowed for resource reselection for 1st resource

Monitoring period (T_WIN 1)

2nd resource

time allowed for resource reselection for 2nd resource

Monitoring period (T_WIN 2)

Slot "N+K2"

3rd resource

time allowed for resource reselection for 3rd resource

Monitoring period (T_WIN 3)

Slot "N+K3"

SCI reception
Slot "N"
1st resource
Slot "N+K1"
time allowed for resource reselection for 1st resource
2nd resource
Slot "N+K2"
time allowed for resource reselection for 2nd resource
3rd resource
Slot "N+K3"
time allowed for resource reselection for 3rd resource
Monitoring period (T_WIN)

FIG. 13

FIG. 14

obtain SL DRX configuration including information related to timer for active time
S1410
select, based on sensing, first SL resource within selection window
S1420
trigger re-evaluation procedure or pre-emption procedure for first SL resource
S1430
reselect first SL resource as second SL resource in re-evaluation procedure or pre-emption procedure
S1440
determine that second SL resource is outside active time of second device
S1450
trigger resource reselection procedure for second SL resource
S1460

FIG. 15

obtain SL DRX configuration including information related to timer for active time
S1510
receive, from first device, first SCI for scheduling of PSSCH and second SCI through PSCCH based on first SL resource
S1520
start timer for active time based on time domain information of second SL resource
S1530

1
IoT device
100f
AI Server/device
400
Robot
100a
150a
150a
150a
Network
(5G)
300
200
200
200
200
200a
150c
Home Appliance
100e
150a
Hand-held
device
100d
150a
XR device
100c
150a
Vehicle
100b-1
150a
Vehicle
100b-2
150b

FIG. 16

FIG. 17

200
Second Device
202
Processor(s)
Memory(s)
204
Transceiver(s)
206
208
108
100
First Device
Transceiver(s)
106
Processor(s)
Memory(s)
104
102

FIG. 18

1000(102/106, 202/206)

codewords

1010 Scrambler

1010 Scrambler

1020 Modulator

1020 Modulator

1030 Layer Mapper

layers

1040 Precoder

1050 Resource Mapper

1050 Resource Mapper

1060 Signal Generator

1060 Signal Generator

antenna ports

# FIG. 19

Device (100,200)
Communication unit (110)
(e.g., 5G communication unit)
Communication circuit (112)
(e.g., processor(s), memory(s))
Transceiver(s) (114)
(e.g., RF unit(s), antenna(s))
Control unit (120)
(e.g., processor(s))
Memory unit (130)
(e.g., RAM, storage)
Additional components (140)
(e.g., power unit/battery, I/O unit,
driving unit, computing unit)

# FIG. 20

100
140a
Power supply unit
108
110
Communication unit
120
Control unit
130
Memory unit
140c
I/O unit
Display
Interface unit
140d
140b

FIG. 21
Car or autonomous vehicle
(100)
Communication unit
(110)
Control unit
(120)
Memory unit
(130)
Driving unit
(140a)
Power supply unit
(140b)
Sensor unit
(140c)
Autonomous driving unit
(140d)
108
208
Device
(100, 200)
Communication unit
(210)
Control unit
(220)
Memory unit
(230)
Driving unit
(140a)
Power supply unit
(140b)
Sensor unit
(140c)
Autonomous driving unit
(140d)

**INTERNATIONAL SEARCH REPORT**

International application No. **PCT/KR2022/003261**

**A. CLASSIFICATION OF SUBJECT MATTER**

**H04W 72/02**(2009.01)i; **H04W 72/04**(2009.01)i; **H04W 72/12**(2009.01)i; **H04W 28/26**(2009.01)i; **H04W 76/28**(2018.01)i; **H04W 4/40**(2018.01)i

According to International Patent Classification (IPC) or to both national classification and IPC

**B. FIELDS SEARCHED**

Minimum documentation searched (classification system followed by classification symbols)

H04W 72/02(2009.01); H04W 28/02(2009.01); H04W 52/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SL(sidelink), DRX(discontinuous reception), 센싱(sensing), 선택(selection), 재평가(re-evaluation), 프리엠션(pre-emption), 재선택(reselection), 활성(active)

**C. DOCUMENTS CONSIDERED TO BE RELEVANT**

| Category* | Citation of document, with indication, where appropriate, of the relevant passages | Relevant to claim No. |
|---|---|---|
| A | LG ELECTRONICS. Discussion on physical layer design considering sidelink DRX operation. R1-2007897, 3GPP TSG RAN WG1 Meeting #103-e. 01 November 2020. See section 2.1. | 1-20 |
| A | FUJITSU. Considerations on Partial Sensing and DRX in NR V2X. R1-2100745, 3GPP TSG RAN WG1 Meeting #104-e. 18 January 2021. See sections 1-6. | 1-20 |
| A | ROBERT BOSCH GMBH. Discussion on Reduce Power Consumption for Sidelink. R1-2101400, 3GPP TSG RAN WG1 Meeting #104-e. 18 January 2021. See sections 1-2.5. | 1-20 |
| A | ZTE CORPORATION et al. Discussion on timer configuration for sidelink DRX. R2-2100497, 3GPP TSG RAN WG2 Meeting #113-e. 15 January 2021. See sections 1-2.2.2. | 1-20 |
| A | WO 2020-256462 A1 (LG ELECTRONICS INC.) 24 December 2020 (2020-12-24) See paragraphs [0086]-[0471]; and figures 2-48. | 1-20 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 June 2022** | **17 June 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**
**Information on patent family members**

International application No.
**PCT/KR2022/003261**

| Patent document cited in search report | Publication date (day/month/year) | Patent family member(s) | Publication date (day/month/year) |
|---|---|---|---|
| WO 2020-256462 A1 | 24 December 2020 | None | |

Form PCT/ISA/210 (patent family annex) (July 2019)